(19) Europäisches Patentamt
European Patent Office
Office européen des brevets

(11) **EP 4 390 665 B1**

(12) **FASCICULE DE BREVET EUROPEEN**

(45) Date de publication et mention
de la délivrance du brevet:
**28.05.2025 Bulletin 2025/22**

(21) Numéro de dépôt: **23215748.7**

(22) Date de dépôt: **12.12.2023**

(51) Classification Internationale des Brevets (IPC):
*G06F 7/58* *(2006.01)*

(52) Classification Coopérative des Brevets (CPC):
**G06F 7/588**

(54) **SOURCE D'ENTROPIE AVEC MÉTHODE DE CALCUL EMBARQUÉ POUR LA GÉNÉRATION DE NOMBRES VRAIMENT ALÉATOIRES**

ENTROPIEQUELLE MIT ON-BOARD-BERECHNUNGSVERFAHREN ZUR ERZEUGUNG VON ECHTEN ZUFALLSZAHLEN

ENTROPY SOURCE WITH ON-BOARD CALCULATION METHOD FOR GENERATING TRUE RANDOM NUMBERS

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **19.12.2022 FR 2213801**

(43) Date de publication de la demande:
**26.06.2024 Bulletin 2024/26**

(73) Titulaire: **Commissariat à l'Energie Atomique et aux Energies Alternatives**
**75015 Paris (FR)**

(72) Inventeurs:
• **BENEA, Licinius-Pompiliu**
**38054 Grenoble Cedex 09 (FR)**
• **WACQUEZ, Romain**
**38054 Grenoble Cedex 09 (FR)**
• **PEBAY-PEYROULA, Florian**
**38054 Grenoble Cedex 09 (FR)**
• **CARMONA, Mikael**
**38054 Grenoble Cedex 09 (FR)**

(74) Mandataire: **Cabinet Beaumont**
**4, Place Robert Schuman**
**B.P. 1529**
**38025 Grenoble Cedex 1 (FR)**

(56) Documents cités:
• **FISCHER VIKTOR ET AL: "Embedded Evaluation of Randomness in Oscillator Based Elementary TRNG", 23 September 2014, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 527 - 543, ISBN: 978-3-540-74549-5, XP047491242**
• **PATRICK HADDAD ET AL: "On the assumption of mutual independence of jitter realizations in P-TRNG stochastic models", DESIGN, AUTOMATION & TEST IN EUROPE, EUROPEAN DESIGN AND AUTOMATION ASSOCIATION, IMEC VZW, KAPELDREEF 75 LEUVEN BELGIUM, 24 March 2014 (2014-03-24), pages 1 - 6, XP058048393, ISBN: 978-3-9815370-2-4**
• **NOUMON ALLINI ELIE ET AL: "Evaluation and monitoring of free running oscillators serving as source of randomness", IACR TRANSACTIONS ON CRYPTOGRAPHIC HARDWARE AND EMBEDDED SYSTEMS, 1 September 2018 (2018-09-01), pages 214 - 242., XP093007447, Retrieved from the Internet <URL:https://www.researchgate.net/publication/328117078_Evaluation_and_Monitoring_of_Free_Running_Oscillators_Serving_as_Source_of_Randomness> [retrieved on 20221213], DOI: 10.13154/tches.v2018.i3.214-242**

EP 4 390 665 B1

**Description**

Domaine technique

La présente description concerne de façon générale les circuits électroniques, et plus particulièrement les sources d'entropie mises en œuvre dans les circuits électroniques pour générer des nombres aléatoires.

Technique antérieure

De nombreux circuits électroniques mettent en œuvre une fonction de génération de nombres vraiment aléatoires (TRNG de l'anglais "True Random Number Generation"). Pour cela, ces circuits disposent d'une source d'entropie à partir de laquelle est extraite une information aléatoire ou aléa. Cette information aléatoire est ensuite utilisée pour générer des nombres vraiment aléatoires. A titre d'exemple, les nombres vraiment aléatoires ainsi obtenus sont utilisés pour générer des clefs de chiffrement, des signatures, etc.

Dans certains des circuits décrits ci-dessus, la source d'entropie est la gigue d'horloge ("jitter" en anglais) d'un oscillateur en anneau. Les oscillateurs en anneau sont très utilisés en vertu de leur simplicité et de la forte connaissance de leurs modèles théoriques. L'incertitude (ou gigue) sur la période réelle d'un signal de sortie d'un oscillateur en anneau par rapport à la période théorique de ce signal est exploitée comme source d'aléa. Cette incertitude augmente avec le nombre de périodes accumulées (ou de manière équivalente le temps d'accumulation).

Les phénomènes physiques qui sont à l'origine de la gigue sont bien documentés dans la littérature. Le modèle généralement utilisé comme base théorique est celui proposé par Hajimiri dans l'article "Jitter and phase noise in ring oscillators" de la revue IEEE J. Solid-State Circuits, vol. 34, no 6, de juin 1999. Ce modèle définit la fonction de susceptibilité du signal de sortie d'un oscillateur en anneau à générer du bruit de phase face à une perturbation. Plus concrètement, seule une perturbation survenue pendant les phases transitoires (de montée ou de descente) du signal de sortie est capable d'induire un bruit de phase dans ce signal. Par ailleurs, le modèle décrit l'effet des différentes sources physiques de bruit sur la gigue accumulée. Ces phénomènes se déclinent en un bruit thermique provenant de l'agitation thermique et en un bruit basse fréquence ("flicker" en anglais) induit par la charge/décharge des pièges de l'oxyde de grille des transistors métal-oxyde semiconducteur (MOS de l'anglais "Metal Oxide Semiconductor") mettant en œuvre l'oscillateur en anneau ou par la diffusion des porteurs dans le canal de ces transistors. En effet, la gigue accumulée présente deux régions : une région variant linéairement avec la variance de la gigue, qui correspond au bruit thermique, et une région variant quadratiquement avec la variance de la gigue, qui correspond correspondant au bruit basse fréquence ("flicker"). Pour utiliser la gigue comme source d'entropie pour la génération de nombres vraiment aléatoires, seule la composante thermique de la gigue reste intéressante car elle est la seule complètement aléatoire. En effet, la composante du bruit basse fréquence ("flicker") n'est pas intéressante car le bruit basse fréquence est auto corrélé et néfaste quant à la prédictibilité de l'aléa généré.

Ainsi, dans les circuits décrits ci-dessus où la source d'entropie pour générer des nombres vraiment aléatoires est basée sur la gigue d'un oscillateur en anneau, il est souhaitable de caractériser la source d'entropie, c'est à dire la gigue, pour discriminer l'amplitude de la composante thermique de la gigue.

Il existe des méthodes embarquées pour caractériser, dans un circuit, une source d'entropie basée sur la gigue d'un premier oscillateur en anneau du circuit en utilisant un deuxième oscillateur du circuit qui est identique au premier.

Une première méthode consiste à mesurer le nombre d'oscillations du premier oscillateur RO1 pendant Q oscillations du deuxième oscillateur, le facteur Q étant obtenu par le biais d'un diviseur de fréquence. Cette méthode est présentée dans l'article "On the assumption of mutual independence of jitter realizations in P-TRNG stochastic models", de P. Haddad, Y. Teglia, F. Bernard, et V. Fischer, présenté dans "Design, Automation & Test in Europe Conference & Exhibition (DATE)", en 2014, à Dresden.

La gigue est ensuite caractérisée en utilisant la variance d'Allan, c'est à dire la variance calculée sur la différence entre deux valeurs consécutives, à savoir ici deux valeur consécutives disponibles en sortie d'un compteur cadencé par le signal de sortie du premier oscillateur et réinitialisé toutes les Q périodes du signal de sortie du deuxième oscillateur par le signal de sortie du diviseur de fréquence par Q. L'utilisation de la variance d'Allan permet de contourner les problèmes reliés à la convergence des modèles tout en respectant une condition de stationnarité. La variance d'Allan est tracée en fonction du nombre Q de périodes d'accumulation et suit alors une loi (ou courbe ou fonction) très similaire à celle du modèle présenté précédemment. Plus exactement, la variance d'Allan tracée en fonction du facteur Q comprend une partie linéaire correspondant au bruit thermique, une partie quadratique correspondant au bruit flicker, et un plancher de bruit correspondant au bruit de quantification inhérent à toute acquisition. En effectuant une régression quadratique de la courbe tracée pour l'approximer par une fonction du type $\sigma(Q)^2 = a_0 + a_1.Q + a_2.Q^2$, avec $\sigma(Q)$ la variance d'Allan en fonction de l'accumulation Q, il est possible d'obtenir les coefficients $a_0$, $a_1$ et $a_2$ qui représentent les coefficients respectivement pour le bruit de quantification, pour le bruit thermique et pour le bruit basse fréquence ("flicker"). Obtenir les coefficients $a_0$, $a_1$ et $a_2$ revient donc à caractériser la source d'entropie, c'est à dire la gigue du premier oscillateur.

Toutefois, cette première méthode présente l'inconvénient que la contribution du circuit diviseur de fréquence sur le bruit final n'est pas connue.

De plus, dans cette première méthode, la caractérisation de la gigue du premier oscillateur est mise en œuvre par un circuit disposé à côté du traitement de la source d'entropie, qui nécessite une surface additionnelle importante.

Une deuxième méthode consiste à échantillonner le signal de sortie du premier oscillateur avec une bascule synchrone de type D ("D flip flop" en anglais) cadencée à la fréquence du deuxième oscillateur. Le signal de sortie de la bascule est alors un signal périodique dont la période moyenne Tm est inversement proportionnelle à la différence entre les périodes des deux oscillateurs. Plus particulièrement, la longueur de la période Tm en nombre H de périodes du signal de l'oscillateur est telle que $H = T1/(T1-T2)$, avec T1 et T2 la valeur moyenne des périodes des premier et deuxième oscillateurs respectivement. Ensuite, une variance est calculée sur la résultante d'une opération OU EXCLUSIF entre deux valeurs du signal de sortie de la bascule séparée l'une de l'autre par G périodes du deuxième oscillateur. La variance en fonction de G a alors deux parties, une partie variant linéairement avec G, qui correspond au bruit thermique, et une partie variant quadratiquement avec G, qui correspond au bruit basse fréquence ("flicker"). Cette méthode est présentée dans l'article "Embedded Evaluation of Randomness in Oscillator Based Elementary TRNG", de V. Fischer et D. Lubicz, présenté dans "Advanced Information Systems Engineering", vol. 7908, Springer Berlin Heidelberg, 2014, p. 527-543. De la même façon que précédemment, il est possible de caractériser la source d'entropie, donc la gigue du premier oscillateur, en effectuant une régression quadratique de la variance tracée en fonction de G.

Toutefois, cette deuxième méthode présente l'inconvénient d'être basée sur des rapports de fréquence qui ne sont pas contrôlés mais subis, et par conséquent la précision de cette deuxième méthode est faible et incontrôlable entre des circuits différents.

De plus, dans cette deuxième méthode, comme pour la première méthode, la caractérisation de la gigue du premier oscillateur est mise en œuvre par un circuit disposé à côté du traitement de la source d'entropie, qui nécessite une surface additionnelle importante.

Ainsi, dans les deux circuits et méthodes connus décrits ci-dessus qui permettent de caractériser une source d'entropie basée sur la gigue d'un oscillateur en anneau, en vue d'assurer une génération d'aléa vraiment aléatoire, présentent des inconvénients. C'est plus généralement le cas des circuits et méthodes connus permettant de caractériser, de manière embarquée, la gigue d'un oscillateur en anneau, c'est à dire permettant de caractériser, de manière embarquée, une source d'entropie.

Résumé de l'invention

Il existe un besoin de pallier tout ou partie des inconvénients des circuits connus et des méthodes connues mises en œuvre dans ces circuits connus pour caractériser, de manière embarquée, une source d'entropie lorsque la source d'entropie est basée sur la gigue d'un oscillateur en anneau.

Un mode de réalisation pallie tout ou partie des inconvénients des circuits connus et des méthodes connues mises en œuvre dans ces circuits connus pour caractériser, de manière embarquée, une source d'entropie lorsque la source d'entropie est basée sur la gigue d'un oscillateur en anneau.

Un mode de réalisation prévoit un dispositif électronique comprenant :

une source d'entropie comprenant :

- un premier oscillateur en anneau et un deuxième oscillateur en anneau identique au premier oscillateur en anneau, et
- une bascule synchrone configurée pour fournir un signal de sortie correspondant à un échantillonnage d'une sortie du premier oscillateur à une fréquence d'une sortie du deuxième oscillateur ;

un compteur configuré pour fournir, pour chaque période du signal de sortie de la bascule, une valeur égale à un nombre de périodes du deuxième oscillateur comptées pendant ladite période du signal de sortie de la bascule ; un premier circuit configuré pour modifier, pendant une première phase, une période d'au moins l'un des deux oscillateurs sur la base des valeurs fournies par le compteur pour qu'un écart moyen entre les périodes des deux oscillateurs soit égal à un écart cible ; et un deuxième circuit configuré pour recevoir les valeurs fournies par le compteur et pour caractériser, pendant une deuxième phase et à partir desdites valeurs, une variance d'Allan sur la sortie du compteur.

Selon un mode de réalisation, l'écart cible est déterminé au moins en partie par un rapport entre la gigue et la période du premier oscillateur et/ou par une précision de mesure cible.

Selon un mode de réalisation, les deux oscillateurs sont mis en œuvre en technologie métal-oxyde-semiconducteur complémentaire sur semiconducteur sur isolant complètement déplété, de préférence sur silicium sur isolant complètement déplété.

Selon un mode de réalisation, le premier circuit est configuré pour commander des grilles arrière d'au moins un élément à retard d'au moins un des deux oscillateurs pour modifier l'écart moyen entre les périodes des deux oscillateurs.

Selon un mode de réalisation, le deuxième circuit est configuré, lors de la caractérisation de la variance d'Allan, pour :

calculer une première valeur de variance d'Allan sur plusieurs valeurs successives fournies par le compteur ;
calculer une deuxième valeur de variance d'Allan sur plusieurs sommes de K1 valeurs successives fournies par le compteur ;
recevoir une troisième valeur théorique de variance d'Allan ou calculer une troisième valeur de variance d'Allan sur plusieurs sommes de K2 valeurs successives fournies par le compteur ; et
calculer trois coefficients d'une courbe quadratique caractérisant la variance d'Allan à partir au moins desdites première, deuxième et troisième valeurs de variance d'Allan.

Selon un mode de réalisation, le deuxième circuit est configuré pour sommer K valeurs successives fournies par le compteur et pour fournir un bit de poids faible de ladite somme, K étant déterminé par une entropie minimale cible.

Selon un mode de réalisation, le dispositif comprend en outre :

un premier circuit d'alarme configuré pour comparer à un premier seuil chaque valeur fournie par le compteur et pour déclencher une première alarme lorsque ladite valeur est supérieure au premier seuil ; et/ou
un deuxième circuit d'alarme configuré pour calculer une valeur de variance d'Allan à partir des valeurs de sortie du compteur et une valeur de variance d'Allan correspondante en utilisant la variance d'Allan caractérisée par le deuxième circuit, puis pour comparer un écart entre ces deux valeurs calculées à un deuxième seuil et pour déclencher une deuxième alarme si l'écart entre ces deux valeurs calculées est supérieur au deuxième seuil.

Un autre mode de réalisation prévoit une méthode de caractérisation d'une source d'entropie comprenant :

- un premier oscillateur en anneau et un deuxième oscillateur en anneau identique au premier oscillateur en anneau, et
- une bascule synchrone fournissant un signal de sortie correspondant à un échantillonnage d'une sortie du premier oscillateur à une fréquence d'une sortie du deuxième oscillateur, la méthode comprenant :

fournir, avec un compteur et à chaque période du signal de sortie de la bascule, une valeur égale à un nombre de périodes du deuxième oscillateur comptées pendant ladite période du signal de sortie de la bascule ;
une première phase consistant à modifier, avec un premier circuit et sur la base des valeurs fournies par le compteur, une période d'au moins l'un des deux oscillateurs pour qu'un écart moyen entre les périodes des deux oscillateurs soit égal à un écart cible ; et
une deuxième phase consistant à caractériser, par un deuxième circuit et à partir des valeurs fournies par le compteur, une variance d'Allan de la sortie du compteur.

Selon un mode de réalisation, l'écart cible est déterminé au moins en partie par un rapport entre la gigue et la période du premier oscillateur et/ou par une précision de mesure cible.

Selon un mode de réalisation, les deux oscillateurs sont mis en œuvre en technologie métal oxyde semiconducteur complémentaire sur semiconducteur sur isolant complètement déplété, de préférence sur silicium sur isolant complètement déplété.

Selon un mode de réalisation, le premier circuit commande des grilles arrière d'au moins un élément à retard d'au moins un des deux oscillateurs pour modifier l'écart moyen entre les périodes des deux oscillateurs.

Selon un mode de réalisation, la caractérisation de variance d'Allan comprend :

calculer, par le deuxième circuit, une première valeur de variance d'Allan sur plusieurs valeurs successives fournies par le compteur ;
calculer, avec le deuxième circuit, plusieurs sommes de K1 valeurs successives fournies par le compteur et une deuxième valeur de variance d'Allan sur lesdites plusieurs sommes de K1 valeurs successives ;
recevoir, par le deuxième circuit, une troisième valeur théorique de variance ou calculer, avec le deuxième circuit, plusieurs sommes de K2 valeurs successives fournies par le compteur et une troisième valeur de variance d'Allan sur lesdites plusieurs sommes de K2 valeurs successives ; et
calculer, par le deuxième circuit, trois coefficients d'une courbe quadratique caractérisant la variance d'Allan à partir au moins desdites première, deuxième et troisième valeurs de variance d'Allan.

Selon un mode de réalisation, la méthode comprend en outre un calcul par le deuxième circuit d'une somme de K valeurs successives fournies par le compteur et une fourniture par le deuxième circuit d'un bit de poids faible de la somme, K étant déterminé par une entropie minimale cible.

Selon un mode de réalisation, méthode comprend en outre :

comparer, par un premier circuit d'alarme, chaque valeur fournie par le compteur avec un premier seuil et déclencher, par le premier circuit d'alarme, une première alarme si une valeur fournie par le compteur est supérieure au seuil ; et/ou calculer, par un deuxième circuit d'alarme, une valeur de variance d'Allan à partir des valeurs de sortie du compteur et une valeur de variance d'Allan correspondante en utilisant la variance d'Allan caractérisée, comparer, par le deuxième circuit d'alarme, un écart entre les deux valeurs de variance d'Allan calculées à un deuxième seuil, et déclencher, par le deuxième circuit d'alarme, une deuxième alarme si l'écart est supérieur au deuxième seuil.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un circuit selon un exemple de mode de réalisation ;

la figure 2 illustre, par un organigramme, un exemple de mode de réalisation d'un procédé de caractérisation d'une source d'entropie du circuit de la figure 1 ;

la figure 3 représente des détails de mise en œuvre d'une partie du circuit de la figure 1 selon un mode de réalisation ;

la figure 4 représente des détails de mise en œuvre d'une autre partie du circuit de la figure 1 selon un mode de réalisation ;

la figure 5 représente un mode de réalisation d'un circuit d'alarme utilisable dans le circuit de la figure 1 ; et

la figure 6 représente un mode de réalisation d'un autre circuit d'alarme utilisable dans le circuit de la figure 1.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les méthodes et circuits usuels utilisant une source d'entropie pour la génération de nombres vraiment aléatoires n'ont pas été détaillés, les modes de réalisation et variantes décrits ici étant compatibles avec ces méthodes et circuits usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Il est ici proposé de caractériser, de manière embarquée, une source d'entropie basée sur la gigue d'un premier oscillateur en anneau. Pour cela, il est prévu un dispositif comprenant le premier oscillateur, un deuxième oscillateur identique au premier et une bascule échantillonnant le signal de sortie du premier oscillateur à la fréquence du deuxième oscillateur. Le dispositif comprend un compteur configuré pour mesurer la durée, en nombre N de périodes T2 du deuxième oscillateur, de chaque période T du signal de sortie de la bascule. Le dispositif comprend en outre un circuit configuré pour commander, sur la base des valeurs de sortie du compteur, la période T1 du premier oscillateur et/ou la période T2 du deuxième oscillateur pour que le nombre moyen Nm de périodes T2 par période T du signal de sortie de la bascule soit égal à une valeur cible, c'est à dire un circuit configuré pour fixer la période moyenne Tm du signal de sortie de la bascule à une valeur cible. Dit encore autrement, le circuit commande l'écart entre la valeur de la période T1 et la valeur de la période T2 pour le rendre égal à un écart cible, cet écart cible étant déterminé au moins en partie par un rapport entre la gigue du premier oscillateur et sa période T1 et/ou par une précision cible de mesure de la gigue du premier oscillateur par le deuxième oscillateur. Le dispositif comprend en outre un autre circuit configuré pour caractériser, après que la période Tm ait été fixée à la valeur désirée, la gigue du premier oscillateur à partir des valeurs de sortie du compteur. Plus particulièrement, ce circuit est configuré pour caractériser la variance d'Allan sur la sortie du compteur, c'est à dire pour calculer les coefficients b0, b1 et b2 d'une régression quadratique de la variance d'Allan en fonction de l'accumulation Nm. A titre d'exemple, pour calculer ces coefficients, le circuit utilise trois valeurs de variance d'Allan pour calculer les coefficients b0, b1 et b2, une première valeur calculée sur les valeurs de sortie du compteur, une deuxième valeur calculée à partir des valeurs de sortie du compteur, et une troisième valeur théorique ou obtenue à partir des valeurs de sortie du compteur.

Le fait de fixer la valeur Nm, donc l'écart entre les valeurs des périodes T1 et T2, permet d'éviter de recourir à un diviseur de fréquence ayant une influence sur la mesure et de maitriser les rapports de fréquences mis en œuvre pour caractériser la source d'entropie, c'est à dire la gigue de l'oscillateur RO1.

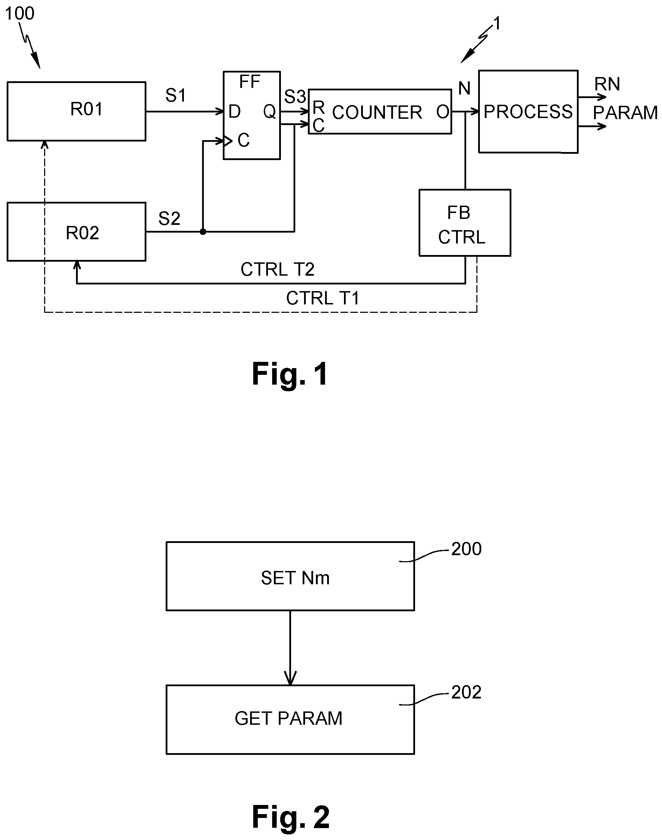

La figure 1 illustre, de manière schématique et sous la forme de blocs, un exemple d'un mode de réalisation d'un circuit 1.

Le circuit 1 comprend deux oscillateurs en anneau identiques RO1 et RO2. L'oscillateur RO1, respectivement RO2, fournit un signal périodique de sortie S1, respectivement S2.

Le circuit 1 comprend en outre une bascule synchrone FF ("flip-flop" en anglais), par exemple de type D ("D flip-flop" en anglais). La bascule FF est configurée pour échantillonner le signal S1 à la fréquence du signal S2.

Dit autrement, la bascule FF est configurée pour mettre à jour un signal de sortie S3 à chaque début de période du signal S2 avec la valeur binaire du signal S1, chaque début de période du signal S2 correspondant à un front actif du signal S2, par exemple un front montant. Entre deux mises à jour successives du signal S3, le signal S3 est maintenu à sa valeur courante, c'est à dire la valeur prise par le signal S3 lors de la première des deux mises à jour successives.

Par exemple, la bascule FF comprend une entrée D de donnée configurée pour recevoir le signal S1, une entrée CK de synchronisation (cadencement) des mises à jour du signal S3 configurée pour recevoir le signal S2, et une sortie Q configurée pour fournir le signal S3.

Les deux oscillateurs RO1 et RO2 et la bascule FF forment une source d'entropie 100. L'aléa extrait de la source d'entropie 100 est généré à partir de la valeur de la période T du signal S3. Le signal S3 est un signal périodique ayant une période moyenne Tm dont la durée moyenne Nm en nombre de période du signal S2 est inversement proportionnelle à la différence entre les périodes T1 et T2, selon la formule Nm = T1/(T1-T2). Le signal S3 a une période instantanée T qui varie avec la gigue du signal S1. Ainsi, la mesure de la période T, c'est à dire de la durée de la période T, est représentative de la gigue du signal S1.

La source d'entropie 100 est une structure par exemple désignée par le sigle COSO (de l'anglais "COherent Sampling ring Ocillator" - oscillateur en anneau à échantillonnage cohérent), qui est utilisée dans les circuits générateurs de nombres vraiment aléatoire à oscillateur en anneau à échantillonnage cohérent (COSO TRNG de l'anglais " COherent Sampling ring Ocillator True Random Number Generator").

Pour mesurer la période T du signal S3, le circuit 1 comprend un circuit (ou compteur) COUNTER. Le circuit COUNTER est configuré pour fournir, pour chaque période T du signal S3, une valeur N, par exemple sous la forme d'un mot numérique, égale au nombre de périodes T2 du signal S2 comptées pendant la période T du signal S3. Dit autrement, le circuit COUNTER est configuré pour mesurer la durée de chaque période T du signal S3 en nombre N de périodes T2 du signal S2.

A titre d'exemple, le circuit COUNTER comprend une entrée de remise à zéro recevant le signal S3, une entrée de synchronisation C recevant le signal S2 et une sortie O fournissant les valeurs N comptées. A chaque début de période T2 du signal S2, par exemple à chaque front montant du signal S2, le circuit COUNTER incrémente la valeur courante de comptage d'une unité. A chaque début de période T du signal S3, par exemple à chaque front montant du signal S3, le circuit COUNTER réinitialise la valeur courante de comptage à zéro. De préférence, la valeur N disponible en sortie du circuit COUNTER, sur la sortie O, est mise à jour à partir de la valeur courante de comptage à chaque début de période du signal S3, juste avant que cette valeur courante de comptage soit remise à zéro. Dit autrement, la valeur N disponible en sortie du circuit COUNTER est mise à jour à chaque début de période T du signal S3 avec la valeur du nombre de période T2 du signal S2 comptés lors de la période T précédente.

Le dispositif 1 comprend en outre un circuit FB CTRL. Le circuit FB CTRL est configuré pour commander ou modifier la période d'au moins l'un des deux oscillateurs RO1 et RO2 de sorte que l'écart entre les périodes T1 et T2 soit égal à un écart cible. La modification de la période T1 de l'oscillateur RO1 et/ou de la période T2 de l'oscillateur RO2 par le circuit FB CTRL est mise en œuvre sur la base des valeurs N de sortie du circuit COUNTER. Par exemple, pour une valeur cible Nmt du nombre moyen de Nm de périodes T2 par période T du signal S3, si la valeur de sortie N est inférieure à Nmt, l'écart entre les périodes T1 et T2 est réduit, et si la valeur de sortie N est supérieure à Nmt, l'écart entre les périodes T1 et T2 est augmenté.

Selon un mode de réalisation, les deux oscillateurs RO1 et RO2 sont mis en œuvre en technologie métal-oxyde-semiconducteur complémentaire (CMOS de l'anglais "Complementary Metal Oxide Semiconductor") sur semiconducteur sur isolant complètement déplété (FDSOI de l'anglais "Fully Depleted Semiconductor On Insulator"), de préférence sur silicium sur isolant complètement déplété ("Fully Depleted Silicon On Insulator"). Dans un tel mode de réalisation, de préférence, la modification de la période T1 de l'oscillateur RO1, respectivement de la période T2 de l'oscillateur RO2, est mise en œuvre en commandant les grilles arrière d'au moins un élément à retard, par exemple un inverseur, de l'oscillateur RO1, respectivement RO2.

Dans des variantes de réalisation, que les oscillateurs RO1 et RO2 soient ou non mis en œuvre en CMOS sur FDSOI, la modification de la période T1 de l'oscillateur RO1, respectivement de la période T2 de l'oscillateur RO2, est mise en œuvre autrement, par exemple en sélectionnant un chemin de propagation d'une oscillation parmi plusieurs possibles, ou en modifiant les conditions d'alimentations de l'oscillateur. A titre d'exemple, l'article de A. Peetermans, V. Rozic, et I. Verbauwheden intitulé "A Highly-Portable True Random Number Generator Based on Coherent Sampling", publié en 2019 dans 29th International Conference on Field Programmable Logic and Applications (FPL) décrit un autre exemple de réglage des périodes relatives de deux oscillateurs en anneau.

Toutefois, l'utilisation des grilles arrière pour moduler la période d'au moins l'un des oscillateurs RO1 et RO2 lorsque ceux-ci sont mis en œuvre en CMOS sur FDSOI permet une plus grande dynamique de réglage et une meilleure précision de réglage de l'écart entre les périodes T1 et T2.

Dans l'exemple de la figure 1, le circuit FB CTRL commande uniquement la période T2 de l'oscillateur RO2 au moyen d'un signal de commande CTRL T2. Dans une variante de réalisation, comme cela est illustré par des traits en pointillés en figure 1, le circuit FB CTRL commande en outre la période T1 de l'oscillateur RO1 au moyen d'un signal de commande CTRL T1. Dans une autre variante non illustrée, le circuit CTRL FB commande uniquement la période T1 de l'oscillateur RO1 au moyen du signal CTRL T2.

Dans le dispositif 1, dans chacun des oscillateurs RO1 et RO2, le rapport R entre la période de l'oscillateur et sa gigue est déterminable et dépend de la technologie de mise en œuvre des oscillateurs. Par exemple, lorsque les oscillateurs sont mis en œuvre en CMOS sur FDSOI, ce rapport R est de l'ordre de 1000. En pratique, pour une technologie donnée, ce rapport peut être obtenu par une phase de caractérisation, par exemple d'une pluralité de circuits.

En outre, dans le dispositif 1, la précision de mesure est déterminée par la différence entre les périodes T1 et T2. Plus concrètement, la précision de mesure est égale à 1/Nm.

Une précision de mesure suffisante est, par exemple, obtenue lorsque Nm est égal sensiblement égal à R. Toutefois, dans d'autres exemples, une précision de mesure où Nm est inférieure à R peut être suffisante. La personne du métier est en mesure de déterminer une précision de mesure cible en fonction de l'application. Par exemple, pour deux oscillateurs RO1 et RO2 ayant des périodes T1 et T2 égales à 2 ps, pour avoir une précision de mesure de 1/1000, l'écart entre les périodes T1 et T2 doit être fixé par le circuit CTRL FB à 2 ns, c'est à dire que le circuit CTRL FB doit, par exemple, fixer la période de l'oscillateur RO1 à 2,002 ns et celle de l'oscillateur RO2 à 2,000 ns.

On comprend alors que la précision de commande des périodes T1 et/ou T2 des oscillateurs par le circuit CTRL FB est déterminée par la précision de mesure cible. En reprenant l'exemple de cas décrit ci-dessus, pour des oscillateurs RO1 et RO2 mis en œuvre en CMOS sur FDSOI, les signaux de commande CTRL T1 et CTRL T2 des grilles arrière doivent pouvoir être modifiés avec une précision de l'ordre du mV pour obtenir l'écart cible égal à 2 ns dans cet exemple.

Le dispositif 1 comprend en outre un circuit PROCESS. Le circuit PROCESS est configuré, une fois que la période moyenne Tm a été réglée par le circuit FB CTRL, pour caractériser ou déterminer ou discriminer les caractéristiques de la gigue, par exemple en utilisant la variance d'Allan sur les valeurs N de sortie du circuit COUNTER à partir des valeurs N de sortie du compteur, et, plus exactement, à partir de plusieurs valeurs N de sortie successives du circuit COUNTER. En pratique, déterminer les caractéristiques de la gigue en utilisant la variance d'Allan sur les valeurs N de sortie du circuit COUNTER revient à caractériser la source d'entropie 100, c'est à dire à caractériser la gigue de l'oscillateur RO1. En outre, la caractérisation de la variance d'Allan consiste à déterminer les coefficients b0, b1 et b2 de la courbe quadratique b0+b1.Q+b2.Q^2 de l'évolution de la variance d'Allan des valeurs de sortie du circuit COUNTER en fonction de l'accumulation Q.

En effet, les valeurs N de sortie du circuit COUNTER varient autour de la valeur Nm en fonction de la gigue de l'oscillateur RO1 accumulée sur Q égal Nm périodes du signal T2, et peuvent donc être directement utilisées pour caractériser la variance d'Allan sur les valeurs de sortie N du circuit COUNTER, c'est à dire pour déterminer ou calculer les coefficients b0, b1 et b2.

Selon un mode de réalisation, une première valeur de variance d'Allan peut être calculée directement sur les sorties N du circuit COUNTER, en calculant la variance sur la différence entre deux valeurs N successives pour un ensemble de plusieurs valeurs N successives. Cette première valeur correspond à une accumulation Q égale à Nm, donc à un premier point de la courbe quadratique b0 + b1.Q + b2.Q^2 de l'évolution de la variance d'Allan en fonction de l'accumulation.

Selon un mode de réalisation, afin de calculer ou déterminer les coefficients b0, b1 et b2, le circuit PROCESS est configuré pour calculer au moins deux autres valeurs de variance d'Allan, ou deux autres points, correspondant à deux autres valeurs Q d'accumulation, à partir des valeurs N de sortie du circuit COUNTER. Le circuit PROCESS est alors configuré pour calculer des valeurs de variance d'Allan pour n'importe quelle valeur Q d'accumulation égale à P.Nm, avec P entier positif. Pour cela, le circuit PROCESS est configuré pour ranger des valeurs N successives dans des groupes successifs de P valeurs N successives, et pour sommer, dans chaque groupe, les P valeurs. Le résultat de chaque somme donne une deuxième valeur et le circuit PROCESS est alors configuré pour calculer la variance d'Allan sur ces deuxièmes valeurs, la variance d'Allan ainsi calculée correspondant à une accumulation Q égale à P.Nm. De préférence, les groupes de P premières valeurs successives sont non recouvrant et adjacent, c'est à dire que lorsque P valeurs successives sont rangées dans un groupe, les P valeurs N successives suivantes sont rangées dans le groupe suivant, et aucune valeur N ne fait partie de deux groupes à la fois. Dans ce mode de réalisation, les trois valeurs de variance d'Allan sont toutes dérivées des valeurs N de sortie du circuit COUNTER, une première valeur de variance d'Allan étant calculée directement sur les valeurs N (pour une valeur d'accumulation Q=Nm), une deuxième valeur de variance d'Allan étant calculée à partir des valeurs N (en utilisant une première valeur K1 du facteur P, pour une valeur d'accumulation Q=K1.Nm) et une troisième valeur de variance d'Allan étant calculée à partir des valeurs N (en utilisant une deuxième valeur K2 du facteur P, pour une valeur d'accumulation Q=K2.Nm).

Selon un mode de réalisation, à partir d'au moins trois valeurs de variance d'Allan correspondant à des valeurs d'accumulation Q différentes, le circuit PROCESS est configuré pour calculer les coefficients b0, b1 et b2.

Selon un mode de réalisation, le circuit PROCESS détermine les coefficients b0, b1 et b2 en calculant trois valeurs de variance d'Allan correspondant à trois valeurs Q d'accumulation différentes comprenant, par exemple, la valeur Q = Nm, et en résolvant un système de trois équations à trois inconnues.

Selon une variante de réalisation, le circuit PROCESS détermine les coefficients b0, b1 et b2 en calculant deux valeurs de variance d'Allan correspondant à deux valeurs Q d'accumulation différentes comprenant, par exemple, la valeur Q = Nm, en obtenant une troisième valeur théorique de variance d'Allan pour une troisième valeur Q d'accumulation, et en résolvant un système de trois équations à trois inconnues. A titre d'exemple, cette troisième valeur théorique provient d'une information stockée dans le dispositif 1, par exemple dans une mémoire du dispositif 1.

Selon une variante de réalisation, le circuit PROCESS détermine les coefficients b0, b1 et b2 en effectuant une régression quadratique à partir de plus de trois valeurs d'Allan correspondant chacune à une valeur Q d'accumulation différente. Ces valeurs de variance d'Allan sont toutes calculées par le circuit PROCESS, sauf, par exemple, une de ces valeurs qui est une valeur théorique directement obtenue par le circuit PROCESS, par exemple à partir d'une information stockée dans le dispositif 1, par exemple dans une mémoire du dispositif 1.

On notera toutefois que la détermination des coefficients b0, b1 et b2 par la mise en œuvre d'une régression quadratique à partir de plus de trois valeurs de variance d'Allan correspondant à des valeurs Q différentes est plus complexe et demande plus de ressources de calcul que la détermination des coefficients b0, b1 et b2 en résolvant un système de trois équations à trois inconnues au moyen de seulement trois valeurs de variance d'Allan distinctes.

A titre d'exemple, des blocs matériels (ou circuits) permettant de calculer une valeur de variance d'Allan sur un ensemble de plusieurs valeurs successives sont connus et présentés, par exemple, en page 202 du document "Characterisation, evaluation and use of clock jitter as a source of randomness in data security" de E. N. Allini ou en page 143 du document "Caractérisation et modélisation de générateurs de nombres aléatoires dans les circuits intégrés" de P. Haddad.

Lorsque le circuit PROCESS utilise trois valeurs de variance d'Allan calculées par le circuit PROCESS (ou deux valeurs de variance d'Allan calculées par le circuit PROCESS et une troisième valeur théorique de variance d'Allan obtenue par le circuit PROCESS), et que ces trois valeurs de variance d'Allan correspondent à des valeurs Q d'accumulation égales respectivement à Nm, à K1.Nm et K2.Nm, de préférence les coefficients K1 et K2 sont choisis pour avoir un étalement logarithmique des trois valeurs Q d'accumulation.

A titre d'exemple, en appelant v1 la variance d'Allan calculée pour Q égal Nm, v2 la variance d'Allan calculée pour Q égal K1.Nm et v3 la variance d'Allan calculée pour Q égal K2.Nm, le système de trois équations à trois inconnues résolu par le circuit PROCESS est le suivant :

$$v1 = b0 + b1.Nm + b2.Nm^2,$$

$$v2 = b0 + b1.K1.Nm + b2.(K1.Nm)^2,$$

$$v3 = b0 + b1.K2.Nm + b2.(K2.Nm)^2.$$

Selon un mode de réalisation, pour simplifier les calculs, K2 est choisi égal à K1 au carré, d'où il résulte que le système à résoudre devient :

$$v1 = b0 + b1.Nm + b2.Nm^2,$$

$$v2 = b0 + b1.K1.Nm + b2.(K1.Nm)^2,$$

$$v3 = b0 + b1.K1^2.Nm + b2.(K1^2.Nm)^2.$$

Une fois que le circuit PROCESS a caractérisé la variance d'Allan sur la sortie du circuit COUNTER, c'est à dire qu'il a déterminé les coefficients b0, b1 et b2, le circuit PROCESS fournit une sortie PARAM indiquant les valeurs b0, b1 et b2 calculées par le circuit PROCESS.

Par exemple, la composante S_thermique de bruit thermique peut alors être calculée à partir des coefficients b0, b1 et b2, par exemple en utilisant l'équation suivante :

$$(S\_thermique/Nm)^2 = b1/Nm.$$

La figure 2 illustre, par un organigramme, un exemple de mode de réalisation d'un procédé de caractérisation de la source d'entropie 100 du circuit 1 de la figure 1, c'est à dire de la gigue de l'oscillateur RO1 du circuit 1 de la figure 1. Sauf indication contraire, tout ce qui a été indiqué en relation avec la figure 1 s'applique à la méthode décrite en relation avec la figure 2.

A une première étape, ou phase, 200 (bloc "SET Nm"), le circuit CTRL FB adapte ou modifie la période d'au moins l'un des oscillateurs RO1 et RO2 sur la base des valeurs N de sortie du circuit COUNTER de sorte que l'écart entre les périodes T1 et T2 soit égal à un écart cible, ou, dit autrement, de sorte que la durée moyenne Nm de la période T du signal S2 en nombre de périodes T2 du signal S2 soit égale à une valeur cible.

Une fois ce réglage obtenu, à une étape, ou phase, suivante 202 (bloc "GET PARAM"), le circuit PROCESS calcule les coefficients b0, b1 et b2 de la fonction b0 + b1.Q + b2.Q décrivant l'évolution de la variance d'Allan sur les sorties du circuit COUNTER en fonction de l'accumulation Q. Les coefficients b0, b1, et b2, c'est à dire la sortie PARAM du circuit PROCESS, caractérisent la variance d'Allan, c'est à dire la source d'entropie 100 et donc la gigue de l'oscillateur RO1.

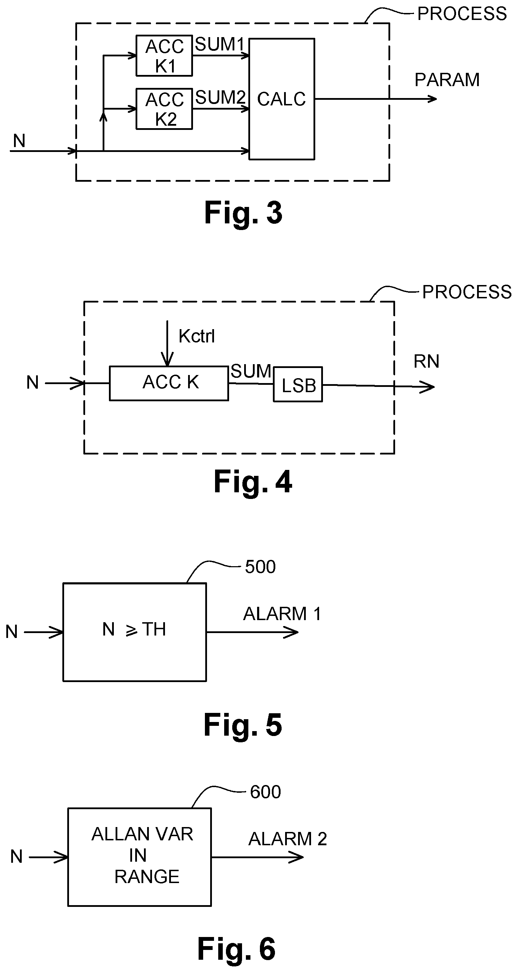

La figure 3 représente des détails de mise en œuvre d'une partie du circuit 1 de la figure 1 selon un mode de réalisation, et, plus particulièrement, des détails de mise en œuvre du circuit PROCESS selon un mode de réalisation.

Dans le mode de réalisation de la figure 3, le circuit PROCESS est configuré pour calculer :

- une première valeur v1 de variance d'Allan directement sur les valeurs N successives de sortie du circuit COUNTER, la valeur v1 correspondant à une valeur Q d'accumulation égale à Nm ;
- une deuxième valeur v2 de variance d'Allan à partir de valeurs dérivée des valeurs N successives, c'est à dire à partir de plusieurs sommes de K1 valeurs N successives, la valeur v2 correspondant alors à une valeur Q d'accumulation égale à K1.Nm ; et
- une troisième valeur v3 de variance d'Allan à partir d'autres valeurs dérivée des valeurs N successives, c'est à dire à partir de plusieurs sommes de K2 valeurs N successives, la valeur v3 correspondant alors à une valeur Q d'accumulation égale à K2.Nm.

Le circuit PROCESS est ensuite configuré pour calculer les coefficients b0, b1 et b2 caractérisant la variance d'Allan. Plus particulièrement, les coefficients b0, b1 et b2 caractérisent l'évolution de la variance d'Allan en fonction de l'accumulation Q, c'est à dire qu'ils caractérisent l'entropie de la source d'entropie 100, ou, dit autrement, la gigue de l'oscillateur RO1.

Pour cela, le circuit PROCESS reçoit les valeurs N successives de sortie du circuit COUNTER (non représenté en figure 3).

Ces valeurs N successives sont fournies à un circuit CALC du circuit PROCESS configuré pour calculer, à partir de ces valeurs N successives, une valeur v1 de la variance d'Allan correspondant à une accumulation Q égale à Nm.

Ces valeurs N successives sont également fournies à un circuit ACC K1 du circuit PROCESS. Le circuit ACC K1 est configuré pour calculer plusieurs sommes SUM1 de K1 valeurs N successives. Par exemple, le circuit ACC K1 est configuré, au fur et à mesure qu'il reçoit les valeurs N successives, pour sommer K1 valeurs successives, fournir une valeur SUM1 résultant de cette sommation, puis pour recommencer cette opération de sommation de K1 valeurs N successives pour produire une valeur SUM1 sur chaque groupe suivant de K1 valeurs N successives.

Le circuit CALC reçoit les valeurs SUM1. Le circuit CALC est configuré pour calculer, à partir des valeurs SUM1 successives produites, par le circuit ACC K1, à partir des valeurs N successives, une valeur v2 de la variance d'Allan correspondant à une accumulation Q égale à K1.Nm.

Les valeurs N successives reçue par le circuit PROCESS sont également fournies à un circuit ACC K2 du circuit PROCESS. Le circuit ACC K2 est configuré pour calculer plusieurs sommes SUM2 de K2 valeurs N successives. Par exemple, le circuit ACC K2 est configuré, au fur et à mesure qu'il reçoit les valeurs N successives, pour sommer K2 valeurs successives, fournir une valeur SUM2 résultant de cette sommation, puis recommencer cette opération de sommation de K2 valeurs N successives pour produire une valeur SUM2 sur chaque groupe de K2 valeurs N successives suivant.

Le circuit CALC reçoit les valeurs SUM2. Le circuit CALC est configuré pour calculer, à partir des valeurs SUM2 successives produites, par le circuit ACC K2, à partir des valeurs N successives, une valeur v3 de la variance d'Allan correspondant à une accumulation Q égale à K2.Nm.

Enfin, le circuit CALC est configuré pour calculer les coefficients b0, b1 et b2 à partir des valeurs v1, v2 et v3 de variance d'Allan. Par exemple, le circuit CALC est configuré pour résoudre le système de trois équations à trois inconnues présenté précédemment en relation avec la figure 1.

Le circuit PROCESS, par exemple son circuit CALC, fournit ensuite la sortie PARAM indiquant la valeur des coefficients b0, b1 et b2.

A titre de variante de réalisation non illustrée, lorsque le circuit CALC est configuré pour calculer la valeur v1, la valeur v2 et les coefficients b0, b1 et b2 à partir des valeurs v1, v2 et d'une troisième valeur v3' où la valeur v3' est une valeur théorique de variance d'Allan directement fournie au circuit CALC, le circuit ACC K2 est omis. Cela permet de simplifier la mise en œuvre du circuit CALC mais peut en contrepartie introduire une erreur de mesure sur le calcul des coefficients b0, b1 et b2.

Bien que cela ne soit pas illustré ici, dans encore une autre variante de réalisation, le circuit PROCESS est configuré pour calculer plus de trois valeurs de variance d'Allan correspondant à des valeurs Q d'accumulation différentes, et pour déterminer les coefficients b0, b1 et b2 à partir de ces valeurs de variance d'Allan en mettant en œuvre une régression quadratique. Toutefois, dans ce cas, le circuit PROCESS sera plus encombrant et plus complexe que celui de la figure 5 ou de la variante de réalisation avec trois valeurs v1, v2 et v3' de variance d'Allan.

Un avantage d'avoir caractérisé la variance d'Allan est qu'il est ensuite possible de déterminer une valeur K entière positive pour laquelle l'accumulation Q = K.Nm de la gigue de l'oscillateur RO1 est suffisante pour produire un bit aléatoire avec une entropie minimale cible Htarget. Cette valeur K peut être calculée en appliquant le modèle de Baudet présenté dans le document "On the Security of Oscillator-Based Random Number Generators", de M. Baudet, D. Lubicz, J. Micolod, et A. Tassiaux, publié dans J Cryptol, vol. 24, n° 2, p. 398-425, avr. 2011.

Par exemple, il est possible de lier l'entropie minimale cible Htarget, les facteurs K1 et K2, la valeur K et les valeurs v1, v2 et v3 au moyen de l'inéquation suivante :

```
K >
ln[(1 - Htarget)/0.584].(Nm + 1).
[(v2 - v1).(K2^2-1) - (v3 - v1).(K1^2-1)]/
[39.478.Nm^3.(k1 - 1).(k2 - 1).(k2 - k1)]
```

Une fois cette valeur K fixée, pour obtenir un bit RN aléatoire avec une entropie supérieure ou égale à l'entropie cible Htarget, il suffit de sommer K valeurs N successives et le bit RN est alors le bit de poids faible du résultat de cette somme.

L'étape optionnelle de détermination de la valeur K sur la base d'une entropie minimale cible Htarget, et de sommation de K valeurs N successives pour obtenir le bit aléatoire RN est par exemple mise en œuvre à la suite de l'étape 202 de la figure 2. Cette étape optionnelle est en outre, par exemple, mise en œuvre par le circuit PROCESS du circuit 1 comme cela est représenté en figure 1 où le circuit PROCESS fournit le bit aléatoire RN.

La figure 4 représente des détails de mise en œuvre d'une autre partie du circuit 1 de la figure 1 selon un mode de réalisation. Plus particulièrement, la figure 4 illustre des détails de mise en œuvre du circuit PROCESS selon un mode de réalisation dans lequel le circuit PROCESS est configuré pour fournir le bit RN correspondant au bit de poids faible de la somme de K valeurs N successives.

Le circuit PROCESS comprend alors un circuit ACC **K.** Le circuit ACC K est configuré pour recevoir les valeurs N successives de sortie du circuit COUNTER (non représenté en figure 4), pour sommer entre elles les K valeurs de chaque ensemble de K valeurs N successives, et pour fournir le résultat SUM de cette opération. A titre d'exemple, le circuit ACC K est commandé par un signal Kctrl indiquant la valeur K à utiliser.

Le bit RN correspond alors au bit de poids faible du résultat SUM. A titre d'exemple, le circuit PROCESS met alors en œuvre une fonction de sélection du bit de poids faible du résultat SUM, par exemple au moyen d'un circuit LSB recevant le signal SUM et fournissant le bit RN.

Ces détails de réalisation du circuit PROCESS lorsque ce dernier est configuré pour fournir le bit RN sont compatibles avec les détails de mise en œuvre du circuit PROCESS décrits en relation avec la figure 3.

De manière optionnelle, selon un mode de réalisation, le dispositif 1 comprend en outre un ou plusieurs circuits d'alarme configuré pour détecter un ou plusieurs disfonctionnements du dispositif 1. Chaque étape de détection d'un disfonctionnement est, par exemple, mise en œuvre dans le procédé décrit en relation avec la figure 2, par exemple à la suite de l'étape 202.

La figure 5 représente un mode de réalisation d'un circuit d'alarme 500 mis en oeuvre dans le circuit 1 de la figure 1.

Dans ce mode de réalisation, le circuit 500 (bloc "N ≥ TH" en figure 5) est configuré pour détecter un blocage du signal S3, c'est à dire lorsque le signal S3 ne varie plus avec le temps de manière périodique avec une période moyenne Tm comme cela a été décrit précédemment. Cette situation résulte par exemple du fait que l'un des deux oscillateurs RO1 et RO2 se verrouille sur l'autre des deux oscillateurs RO1 et RO2, ce qui conduit à un signal S3 dont l'état est constant (haut ou bas). Cette situation peut également être le résultat d'une attaque du dispositif 1 par un pirate.

Pour détecter un tel blocage du signal S3, le circuit 500 est configuré pour recevoir les valeurs N de sortie du circuit COUNTER, et pour comparer chaque valeur N reçue à un seuil TH. Le seuil est supérieur à la valeur Nm, par exemple au moins deux fois supérieur à la valeur Nm. Dit autrement, le seuil TH est déterminé par l'écart cible utilisé à l'étape 200 (figure 2).

Si l'une des valeurs N reçues dépasse le seuil TH, cela signifie que le signal S3 est dans une situation de blocage, et le circuit 500 est alors configuré pour fournir un signal d'alarme ALARM1.

A titre d'exemple, lorsqu'un signal ALARM1 est émis par le circuit 500, le circuit 1 est configuré pour réinitialiser les oscillateurs RO1 et RO2, par exemple en bloquant avec un signal de commande la propagation d'oscillations dans ces oscillateurs avant de permettre à nouveau cette propagation. Après une telle étape de réinitialisation des oscillateurs RO1 et RO2, au moins l'étape 200 du procédé de caractérisation de la source d'entropie 100 est mise en œuvre.

La figure 6 représente un mode de réalisation d'un autre circuit d'alarme 600 mis en oeuvre dans le circuit 1 de la figure 1.

Dans ce mode de réalisation, le circuit 600 (bloc "ALLAN VAR IN RANGE?" en figure 6) est configuré pour détecter une modification du fonctionnement des oscillateurs RO1 et RO2 résultant, par exemple, de variations de température de fonctionnement, du vieillissement du circuit.

Pour cela, le circuit 600 reçoit les valeurs N successives de sortie du circuit COUNTER, et est configuré pour calculer des sommes SUM3 de K3 valeurs successives, et pour calculer une valeur v4 de variance d'Allan sur les valeurs successives SUM3. Le circuit 600 est en outre configuré pour comparer la valeur v4 à une valeur V4 de variance calculée à partir des coefficients b0, b1 et b2 déterminés à l'étape 200 et d'une valeur Q d'accumulation égale à K3.Nm. Si l'écart entre les valeurs v4 et V4 est supérieur à un seuil, cela signifie que le fonctionnement des oscillateurs RO1 et RO2 a été modifié depuis la mise en œuvre de l'étape 200 et que les coefficients b0, b1 et b2 déterminés lors de cette étape ne sont plus valable.

Selon un mode de réalisation, la valeur K3 est choisie égale à la valeur K utilisée pour générer le bit RN. Cela permet de réutiliser le circuit ACC K du circuit PROCESS, qui fournit alors directement les valeurs SUM. Dans des variantes de réalisation, la valeur K3 est différente de la valeur K, mais est de préférence choisie pour correspondre à une valeur Q d'accumulation pour laquelle la variance d'Allan déterminée à l'étape 200 est dans la région dominée par le bruit thermique.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Dispositif électronique (1) comprenant :

    une source d'entropie (100) comprenant :

        - un premier oscillateur en anneau (RO1) et un deuxième oscillateur en anneau (RO2) identique au premier oscillateur en anneau, et
        - une bascule synchrone (FF) configurée pour fournir un signal de sortie (S3) correspondant à un échantillonnage d'une sortie (S1) du premier oscillateur (RO1) à une fréquence d'une sortie (S2) du deuxième oscillateur (RO2) ;

    un compteur (COUNTER) configuré pour fournir, pour chaque période du signal de sortie (S3) de la bascule (FF), une valeur (N) égale à un nombre de périodes du deuxième oscillateur (RO2) comptées pendant ladite période du signal de sortie (S3) de la bascule (FF) ;
    un premier circuit (FB CTRL) configuré pour modifier, pendant une première phase (200), une période d'au moins

EP 4 390 665 B1

l'un des deux oscillateurs (RO1, RO2) sur la base des valeurs (N) fournies par le compteur (COUNTER) pour qu'un écart moyen entre les périodes des deux oscillateurs soit égal à un écart cible ; et

un deuxième circuit (PROCESS) configuré pour recevoir les valeurs (N) fournies par le compteur et pour caractériser, pendant une deuxième phase (200) et à partir desdites valeurs (N), une variance d'Allan sur la sortie (O) du compteur.

2. Dispositif selon la revendication 1, dans lequel l'écart cible est déterminé au moins en partie par un rapport entre la gigue et la période du premier oscillateur (RO1) et/ou par une précision de mesure cible.

3. Dispositif selon la revendication 1 ou 2, dans lequel les deux oscillateurs (RO1, RO2) sont mis en œuvre en technologie métal-oxyde-semiconducteur complémentaire sur semiconducteur sur isolant complètement déplété, de préférence sur silicium sur isolant complètement déplété.

4. Dispositif selon la revendication 3, dans lequel le premier circuit (FB CTRL) est configuré pour commander (CTRL T1, CTRL T2) des grilles arrière d'au moins un élément à retard d'au moins un des deux oscillateurs (RO1, RO2) pour modifier l'écart moyen entre les périodes des deux oscillateurs.

5. Dispositif selon l'une quelconque des revendications 1 à 4, dans lequel le deuxième circuit (PROCESS) est configuré, lors de la caractérisation de la variance d'Allan, pour :

calculer une première valeur de variance d'Allan sur plusieurs valeurs successives (N) fournies par le compteur (COUNTER) ;

calculer (ACC K1) une deuxième valeur de variance d'Allan sur plusieurs sommes (SUM1) de K1 valeurs successives (N) fournies par le compteur (COUNTER) ;

recevoir une troisième valeur théorique de variance d'Allan ou calculer (ACC K2) une troisième valeur de variance d'Allan sur plusieurs sommes (SUM2) de K2 valeurs successives (N) fournies par le compteur ; et

calculer (CALC) trois coefficients d'une courbe quadratique caractérisant la variance d'Allan à partir au moins desdites première, deuxième et troisième valeurs de variance d'Allan.

6. Dispositif selon l'une quelconque des revendications 1 à 5, dans lequel le deuxième circuit (PROCESS ; ACC K, LSB) est configuré pour sommer K valeurs successives (N) fournies par le compteur (COUNTER) et pour fournir (LSB) un bit de poids faible (RN) de ladite somme (SUM), K étant déterminé par une entropie minimale cible.

7. Dispositif selon l'une quelconque des revendications 1 à 6, dans lequel le dispositif comprend en outre :

un premier circuit d'alarme (500) configuré pour comparer à un premier seuil chaque valeur (N) fournie par le compteur (COUNTER) et pour déclencher une première alarme (ALARM 1) lorsque ladite valeur est supérieure au premier seuil ; et/ou

un deuxième circuit d'alarme (600) configuré pour calculer une valeur de variance d'Allan à partir des valeurs de sortie (N) du compteur (COUNTER) et une valeur de variance d'Allan correspondante en utilisant la variance d'Allan **caractérisée par** le deuxième circuit (PROCESS), puis pour comparer un écart entre ces deux valeurs calculées à un deuxième seuil et pour déclencher une deuxième alarme (ALARM 2) si l'écart entre ces deux valeurs calculées est supérieur au deuxième seuil.

8. Méthode de caractérisation d'une source d'entropie comprenant :

- un premier oscillateur en anneau (RO1) et un deuxième oscillateur en anneau (RO2) identique au premier oscillateur en anneau, et

- une bascule synchrone (FF) fournissant un signal de sortie (S3) correspondant à un échantillonnage d'une sortie (S1) du premier oscillateur (RO1) à une fréquence d'une sortie (S2) du deuxième oscillateur (RO2),

la méthode comprenant :

fournir, avec un compteur (COUNTER) et à chaque période du signal de sortie (S3) de la bascule (FF), une valeur (N) égale à un nombre de périodes du deuxième oscillateur (RO2) comptées pendant ladite période du signal de sortie (S3) de la bascule (FF) ;

une première phase (200) consistant à modifier, avec un premier circuit (FB CTRL) et sur la base des valeurs (N) fournies par le compteur (COUNTER), une période d'au moins l'un des deux oscillateurs (RO1, RO2) pour qu'un écart moyen entre les périodes des deux oscillateurs (RO1, RO2) soit égal à un écart cible ; et
une deuxième phase (202) consistant à caractériser, par un deuxième circuit (PROCESS) et à partir des valeurs (N) fournies par le compteur (COUNTER), une variance d'Allan de la sortie (O) du compteur (COUNTER).

9. Méthode selon la revendication 8, dans laquelle l'écart cible est déterminé au moins en partie par un rapport entre la gigue et la période du premier oscillateur (RO1) et/ou par une précision de mesure cible.

10. Méthode selon la revendication 8 ou 9, dans laquelle les deux oscillateurs (RO1, RO2) sont mis en œuvre en technologie métal oxyde semiconducteur complémentaire sur semiconducteur sur isolant complètement déplété, de préférence sur silicium sur isolant complètement déplété.

11. Méthode selon la revendication 10, dans laquelle le premier circuit (FB CTRL) commande des grilles arrière d'au moins un élément à retard d'au moins un des deux oscillateurs (RO1, RO2) pour modifier l'écart moyen entre les périodes des deux oscillateurs.

12. Méthode selon l'une quelconque des revendications 8 à 11, dans laquelle la caractérisation de variance d'Allan comprend :

calculer, par le deuxième circuit (PROCESS), une première valeur de variance d'Allan sur plusieurs valeurs successives (N) fournies par le compteur (COUNTER) ;
calculer, avec le deuxième circuit (PROCESS), plusieurs sommes (SUM1) de K1 valeurs successives (N) fournies par le compteur (COUNTER) et une deuxième valeur de variance d'Allan sur lesdites plusieurs sommes (SUM1) de K1 valeurs successives ;
recevoir, par le deuxième circuit (PROCESS), une troisième valeur théorique de variance ou calculer, avec le deuxième circuit (PROCESS), plusieurs sommes (SUM2) de K2 valeurs successives (N) fournies par le compteur (COUNTER) et une troisième valeur de variance d'Allan sur lesdites plusieurs sommes (SUM2) de K2 valeurs successives ; et
calculer, par le deuxième circuit (PROCESS), trois coefficients d'une courbe quadratique caractérisant la variance d'Allan à partir au moins desdites première, deuxième et troisième valeurs de variance d'Allan.

13. Méthode selon l'une quelconque des revendications 8 à 12, dans laquelle la méthode comprend en outre un calcul par le deuxième circuit (PROCESS) d'une somme de K valeurs successives (N) fournies par le compteur (COUNTER) et une fourniture par le deuxième circuit (PROCESS) d'un bit (RN) de poids faible de la somme (SUM), K étant déterminé par une entropie minimale cible.

14. Méthode selon l'une quelconque des revendications 8 à 13, dans laquelle la méthode comprend en outre :

comparer, par un premier circuit d'alarme (500), chaque valeur (N) fournie par le compteur avec un premier seuil et déclencher, par le premier circuit d'alarme (500), une première alarme (ALARM 1) si une valeur (N) fournie par le compteur (COUNTER) est supérieure au seuil ; et/ou
calculer, par un deuxième circuit d'alarme (600), une valeur de variance d'Allan à partir des valeurs de sortie (N) du compteur (COUNTER) et une valeur de variance d'Allan correspondante en utilisant la variance d'Allan caractérisée, comparer, par le deuxième circuit d'alarme (600), un écart entre les deux valeurs de variance d'Allan calculées à un deuxième seuil, et déclencher, par le deuxième circuit d'alarme (600), une deuxième alarme (ALARM 2) si l'écart est supérieur au deuxième seuil.

**Patentansprüche**

1. Elektronische Vorrichtung (1), die Folgendes aufweist:

eine Entropiequelle (100), die Folgendes aufweist:

- einen ersten Ringoszillator (RO1) und einen zweiten Ringoszillator (RO2), der mit dem ersten Ringoszillator identisch ist, und
- ein synchrones Flip-Flop (FF), das konfiguriert ist zum Liefern eines Ausgangssignals (S3) entsprechend einer Abtastung eines Ausgangs (S1) des ersten Oszillators (RO1) mit einer Frequenz eines Ausgangs (S2) des zweiten Oszillators (RO2);

EP 4 390 665 B1

einen Zähler (COUNTER), der konfiguriert ist zum Liefern, für jede Periode des Ausgangssignals (S3) des Flipflops (FF), eines Wertes (N) gleich einer Anzahl von Perioden des zweiten Oszillators (RO2), die während der Periode des Ausgangssignals (S3) des Flipflops (FF) gezählt wurden;

eine erste Schaltung (FB CTRL), die konfiguriert ist zum Modifizieren, während einer ersten Phase (200), einer Periode von wenigstens einem der zwei Oszillatoren (RO1, RO2) basierend auf den Werten (N), die von dem Zähler (COUNTER) geliefert werden, so dass eine durchschnittliche Differenz zwischen den Perioden der zwei Oszillatoren gleich einer Zieldifferenz ist; und

eine zweite Schaltung (PROCESS), die konfiguriert ist zum Empfangen der Werte (N), die von dem Zähler geliefert werden, und zum Charakterisieren, während einer zweiten Phase (200) und basierend auf den Werten (N), einer Allan-Varianz am Ausgang (O) des Zählers.

2.   Vorrichtung nach Anspruch 1, wobei die Zieldifferenz zumindest teilweise durch ein Verhältnis des Jitters zu der Periode des ersten Oszillators (RO1) und/oder durch eine Ziel-Messgenauigkeit bestimmt ist.

3.   Vorrichtung nach Anspruch 1 oder 2, wobei die beiden Oszillatoren (RO1, RO2) in komplementärer Metall-Oxid-Halbleitertechnologie auf vollständig verarmtem Halbleiter auf Isolator, vorzugsweise auf vollständig verarmtem Silizium auf Isolator, implementiert sind.

4.   Vorrichtung nach Anspruch 3, wobei die erste Schaltung (FB CTRL) konfiguriert ist zum Steuern (CTRL T1, CTRL T2) von Rückgattern von wenigstens einem Verzögerungselement von wenigstens einem der beiden Oszillatoren (RO1, RO2) zum Modifizieren der durchschnittlichen Differenz zwischen den Perioden der beiden Oszillatoren.

5.   Vorrichtung nach einem der Ansprüche 1 bis 4, wobei die zweite Schaltung (PROCESS) konfiguriert ist, während der Charakterisierung der Allan-Varianz, zum:

Berechnen eines ersten Allan-Varianzwertes über eine Vielzahl von aufeinanderfolgenden Werten (N), die von dem Zähler (COUNTER) geliefert werden;

Berechnen (ACC K1) eines zweiten Allan-Varianzwertes über eine Vielzahl von Summen (SUM1) von K1 aufeinanderfolgenden Werten (N), die von dem Zähler (COUNTER) geliefert werden;

Empfangen eines dritten theoretischen Allan-Varianzwertes oder Berechnen (ACC K2) eines dritten Allan-Varianzwertes über eine Vielzahl von Summen (SUM2) von K2 aufeinanderfolgenden Werten (N), die von dem Zähler (COUNTER) geliefert werden; und

Berechnen (CALC) von drei Koeffizienten einer quadratischen Kurve, die die Allan-Varianz charakterisiert, basierend auf wenigstens dem ersten, zweiten und dritten Allan-Varianzwert.

6.   Vorrichtung nach einem der Ansprüche 1 bis 5, wobei die zweite Schaltung (PROCESS; ACC K, LSB) konfiguriert ist zum Addieren von K aufeinanderfolgenden Werten (N), die von dem Zähler (COUNTER) geliefert werden, und zum Liefern (LSB) eines am wenigsten signifikanten Bits (RN) der Summe (SUM), wobei K durch eine minimale Zielentropie bestimmt ist.

7.   Vorrichtung nach einem der Ansprüche 1 bis 6, wobei die Vorrichtung ferner Folgendes aufweist:

eine erste Alarmschaltung (500), die konfiguriert ist zum Vergleichen jedes Wertes (N), der von dem Zähler (COUNTER) geliefert wird, mit einem ersten Schwellenwert und zum Auslösen eines ersten Alarms (ALARM 1), wenn der Wert größer als der erste Schwellenwert ist; und/oder

eine zweite Alarmschaltung (600), die konfiguriert ist zum Berechnen eines Allan-Varianzwerts basierend auf den Ausgangswerten (N) des Zählers (COUNTER) und eines entsprechenden Allan-Varianzwerts unter Verwendung der Allan-Varianz, die durch die zweite Schaltung (PROCESS) charakterisiert wird, und dann zum Vergleichen einer Differenz zwischen diesen beiden berechneten Werten mit einem zweiten Schwellenwert und zum Auslösen eines zweiten Alarms (ALARM 2), wenn die Differenz zwischen diesen beiden berechneten Werten größer als der zweite Schwellenwert ist.

8.   Verfahren zum Charakterisieren einer Entropiequelle, die Folgendes aufweist:

- einen ersten Ringoszillator (RO1) und einen zweiten Ringoszillator (RO2), der mit dem ersten Ringoszillator identisch ist, und

- ein synchrones Flip-Flop (FF), das ein Ausgangssignal (S3) liefert entsprechend einer Abtastung eines Ausgangs (S1) des ersten Oszillators (RO1) mit einer Frequenz eines Ausgangs (S2) des zweiten Oszillators (RO2),

wobei das Verfahren Folgendes aufweist:

das Liefern, mit einem Zähler (COUNTER) und bei jeder Periode des Ausgangssignals (S3) des Flipflops (FF), eines Wertes (N) gleich einer Anzahl von Perioden des zweiten Oszillators (RO2), die während der Periode des Ausgangssignals (S3) des Flipflops (FF) gezählt wurden;
eine erste Phase (200) aufweisend Modifizieren, mit einer ersten Schaltung (FB CTRL) und basierend auf den Werten (N), die von dem Zähler (COUNTER) geliefert werden, einer Periode von wenigstens einem der beiden Oszillatoren (RO1, RO2), so dass eine durchschnittliche Differenz zwischen den Perioden der beiden Oszillatoren (RO1, RO2) gleich einer Zieldifferenz ist; und
eine zweite Phase (202 aufweisend die Charakterisierung, durch eine zweite Schaltung (PROCESS) und basierend auf den Werten (N), die von dem Zähler (COUNTER) geliefert werden, einer Allan-Varianz des Ausgangs (O) des Zählers (COUNTER).

9. Verfahren nach Anspruch 8, wobei die Zieldifferenz wenigstens teilweise durch ein Verhältnis des Jitters zur Periode des ersten Oszillators (RO1) und/oder durch eine Zielmessgenauigkeit bestimmt ist.

10. Verfahren nach Anspruch 8 oder 9, wobei die beiden Oszillatoren (RO1, RO2) in komplementärer Metall-Oxid-Halbleitertechnologie auf vollständig verarmtem Halbleiter auf Isolator, vorzugsweise auf vollständig verarmtem Silizium auf Isolator, implementiert sind.

11. Verfahren nach Anspruch 10, wobei die erste Schaltung (FB CTRL) Rückgatter von wenigstens einem Verzögerungselement von wenigstens einem der beiden Oszillatoren (RO1, RO2) steuert zum Modifizieren der durchschnittlichen Differenz zwischen den Perioden der beiden Oszillatoren.

12. Verfahren nach einem der Ansprüche 8 bis 11, wobei die Charakterisierung der Allan-Varianz Folgendes aufweist:

das Berechnen, durch die zweite Schaltung (PROCESS), eines ersten Allan-Varianzwertes über eine Vielzahl von aufeinanderfolgenden Werten (N), die von dem Zähler (COUNTER) geliefert werden;
das Berechnen, mit der zweiten Schaltung (PROCESS), einer Vielzahl von Summen (SUM1) von K1 aufeinanderfolgenden Werten (N), die von dem Zähler (COUNTER) geliefert werden, und eines zweiten Allan-Varianzwertes über die Vielzahl von Summen (SUM1) von K1 aufeinanderfolgenden Werten;
das Empfangen, durch die zweite Schaltung (PROCESS), eines dritten theoretischen Varianzwertes oder das Berechnen, mit der zweiten Schaltung (PROCESS), einer Vielzahl von Summen (SUM2) von K2 aufeinanderfolgenden Werten (N), die von dem Zähler (COUNTER) geliefert werden, und eines dritten Allan Varianzwertes über die Vielzahl von Summen (SUM2) von K2 aufeinanderfolgenden Werten; und
das Berechnen, durch die zweite Schaltung (PROCESS), von drei Koeffizienten einer quadratischen Kurve, die die Allan-Varianz charakterisiert, basierend auf wenigstens den ersten, zweiten und dritten Allan-Varianzwerten.

13. Verfahren nach einem der Ansprüche 8 bis 12, wobei das Verfahren ferner ein Berechnen aufweist, durch die zweite Schaltung (PROCESS), und zwar einer Summe von K aufeinanderfolgenden Werten (N), die von dem Zähler (COUNTER) geliefert werden, und ein Liefern, durch die zweite Schaltung (PROCESS), eines am wenigsten signifikanten Bits (RN) der Summe (SUM), wobei K durch eine minimale Zielentropie bestimmt wird.

14. Verfahren nach einem der Ansprüche 8 bis 13, wobei das Verfahren ferner Folgendes aufweist:

das Vergleichen, durch eine erste Alarmschaltung (500), jedes Wertes (N), der von dem Zähler geliefert wird, mit einem ersten Schwellenwert und das Auslösen, durch die erste Alarmschaltung (500), eines ersten Alarms (ALARM 1), wenn ein Wert (N), der von dem Zähler (COUNTER) geliefert wird, größer als der Schwellenwert ist; und/oder
das Berechnen, durch eine zweite Alarmschaltung (600), eines Allan-Varianzwertes basierend auf den Ausgangswerten (N) des Zählers (COUNTER) und eines entsprechenden Allan-Varianzwertes unter Verwendung der charakterisierten Allan-Varianz, das Vergleichen, durch die zweite Alarmschaltung (600), einer Differenz zwischen den zwei berechneten Allan-Varianzwerten mit einem zweiten Schwellenwert, und das Auslösen, durch die zweite Alarmschaltung (600), eines zweiten Alarms (ALARM 2), wenn die Differenz größer als der zweite Schwellenwert ist.

**Claims**

1. Electronic device (1) comprising:

    an entropy source (100) comprising:

        - a first ring oscillator (RO1) and a second ring oscillator (RO2) identical to the first ring oscillator, and
        - a synchronous flip-flop (FF) configured to supply an output signal (S3) corresponding to a sampling of an output (S1) of the first oscillator (RO1) at a frequency of an output (S2) of the second oscillator (RO2);

    a counter (COUNTER) configured to supply, for each period of the output signal (S3) of the flip-flop (FF), a value (N) equal to a number of periods of the second oscillator (RO2) counted during said period of the output signal (S3) of the flip-flop (FF);
    a first circuit (FB CTRL) configured to modify, during a first phase (200), a period of at least one of the two oscillators (RO1, RO2) based on the values (N) supplied by the counter (COUNTER) so that an average difference between the periods of the two oscillators is equal to a target difference; and
    a second circuit (PROCESS) configured to receive the values (N) supplied by the counter and to characterize, during a second phase (200) and based on said values (N), an Allan variance on the output (O) of the counter.

2. Device according to claim 1, wherein the target difference is at least partly determined by a ratio of the jitter to the period of the first oscillator (RO1) and/or by a target measurement accuracy.

3. Device according to claim 1 or 2, wherein the two oscillators (RO1, RO2) are implemented in complementary metal-oxide semiconductor technology on fully depleted semiconductor on insulator, preferably on fully depleted silicon on insulator.

4. Device according to claim 3, wherein the first circuit (FB CTRL) is configured to control (CTRL T1, CTRL T2) back gates of at least one delay element of at least one of the two oscillators (RO1, RO2) to modify the average difference between the periods of the two oscillators.

5. Device according to any of claims 1 to 4, wherein the second circuit (PROCESS) is configured, during the characterization of the Allan variance, to:

    compute a first Allan variance value over a plurality of successive values (N) supplied by the counter (COUNTER);
    compute (ACC K1) a second Allan variance value over a plurality of sums (SUM1) of K1 successive values (N) supplied by the counter (COUNTER);
    receive a third theoretical Allan variance value or compute (ACC K2) a third Allan variance value over a plurality of sums (SUM2) of K2 successive values (N) supplied by the counter; and
    compute (CALC) three coefficients of quadratic curve characterizing the Allan variance based on at least said first, second, and third Allan variance values.

6. Device according to any of claims 1 to 5, wherein the second circuit (PROCESS; ACC K, LSB) is configured to add K successive values (N) supplied by the counter (COUNTER) and to deliver (LSB) a least significant bit (RN) of said sum (SUM), K being determined by a minimum target entropy.

7. Device according to any of claims 1 to 6, wherein the device further comprises:

    a first alarm circuit (500) configured to compare with a first threshold each value (N) supplied by the counter (COUNTER) and to trigger a first alarm (ALARM 1) when said value is greater than the first threshold; and/or
    a second alarm circuit (600) configured to compute an Allan variance value based on the output values (N) of the counter (COUNTER) and a corresponding Allan variance value by using the Allan variance **characterized by** the second circuit (PROCESS), and then to compare a difference between these two computed values with a second threshold and to trigger a second alarm (ALARM 2) if the difference between these two computed values is greater than the second threshold.

8. Method for characterizing an entropy source comprising:

    - a first ring oscillator (RO1) and a second ring oscillator (RO2) identical to the first ring oscillator, and

- a synchronous flip-flop (FF) delivering an output signal (S3) corresponding to a sampling of an output (S1) of the first oscillator (RO1) at a frequency of an output (S2) of the second oscillator (RO2),

the method comprising:

the supplying, with a counter (COUNTER) and at each period of the output signal (S3) of the flip-flop (FF), a value (N) equal to a number of periods of the second oscillator (RO2) counted during said period of the output signal (S3) of the flip-flop (FF);

a first phase (200) comprising modifying, with a first circuit (FB CTRL) and based on the values (N) supplied by the counter (COUNTER), a period of at least one of the two oscillators (RO1, RO2) so that an average difference between the periods of the two oscillators (RO1, RO2) is equal to a target difference; and

a second phase (202) comprising the characterization, by a second circuit (PROCESS) and based on the values (N) supplied by the counter (COUNTER), of an Allan variance of the output (O) of the counter (COUNTER).

9. Method according to claim 8, wherein the target difference is at least partly determined by a ratio of the jitter to the period of the first oscillator (RO1) and/or by a target measurement accuracy.

10. Method according to claim 8 or 9, wherein the two oscillators (RO1, RO2) are implemented in complementary metal-oxide semiconductor technology on fully depleted semiconductor on insulator, preferably on fully depleted silicon on insulator.

11. Method according to claim 10, wherein the first circuit (FB CTRL) controls back gates of at least one delay element of at least one of the two oscillators (RO1, RO2) to modify the average difference between the periods of the two oscillators.

12. Method according to any of claims 8 to 11, wherein the Allan variance characterization comprises:

the computing, by the second circuit (PROCESS), of a first Allan variance value over a plurality of successive values (N) supplied by the counter (COUNTER);

the computing, with the second circuit (PROCESS), of a plurality of sums (SUM1) of K1 successive values (N) supplied by the counter (COUNTER) and a second Allan variance value over said plurality of sums (SUM1) of K1 successive values;

the receiving, by the second circuit (PROCESS), of a third theoretical variance value or the computing, with the second circuit (PROCESS), of a plurality of sums (SUM2) of K2 successive values (N) supplied by the counter (COUNTER) and a third Allan variance value over said plurality of sums (SUM2) of K2 successive values; and

the computing, by the second circuit (PROCESS), of three coefficients of a quadratic curve characterizing the Allan variance based on at least said first, second, and third Allan variance values.

13. Method according to any of claims 8 to 12, wherein the method further comprises a computing by the second circuit (PROCESS) of a sum of K successive values (N) supplied by the counter (COUNTER) and a delivery by the second circuit (PROCESS) of a least significant bit (RN) of the sum (SUM), K being determined by a minimum target entropy.

14. Method according to any of claims 8 to 13, wherein the method further comprises:

the comparing, by a first alarm circuit (500), of each value (N) supplied by the counter with a first threshold and the triggering, by the first alarm circuit (500), of a first alarm (ALARM 1) if a value (N) supplied by the counter (COUNTER) is greater than the threshold; and/or

the computing, by a second alarm circuit (600), of an Allan variance value based on the output values (N) of the counter (COUNTER) and a corresponding Allan variance value by using the characterized Allan variance, the comparing, by the second alarm circuit (600), of a difference between the two computed Allan variance values with a second threshold, and the triggering, by the second alarm circuit (600), of a second alarm (ALARM 2) if the difference is greater than the second threshold.

**Fig. 1**

**Fig. 2**

**Fig. 3**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HAJIMIRI**. Jitter and phase noise in ring oscillators. *IEEE J. Solid-State Circuits*, June 1999, vol. 34 (6)
- **DE P. HADDAD** ; **Y. TEGLIA** ; **F. BERNARD** ; **V. FISCHER**. On the assumption of mutual independence of jitter realizations in P-TRNG stochastic models. *Design, Automation & Test in Europe Conference & Exhibition (DATE)*, 2014
- Embedded Evaluation of Randomness in Oscillator Based Elementary TRNG. **V. FISCHER** ; **D. LUBICZ**. Advanced Information Systems Engineering. Springer Berlin Heidelberg, 2014, vol. 7908, 527-543
- A Highly-Portable True Random Number Generator Based on Coherent Sampling. **DE A. PEETER-MANS** ; **V. ROZIC** ; **I. VERBAUWHEDEN**. 29th International Conference on Field Programmable Logic and Applications (FPL). 2019
- **E. N. ALLINI** ; **P. HADDAD.** Caractérisation et modélisation de générateurs de nombres aléatoires dans les circuits intégrés. *Characterisation, evaluation and use of clock jitter as a source of randomness in data security*, 143
- **DE M. BAUDET** ; **D. LUBICZ** ; **J. MICOLOD** ; **A. TASSIAUX**. On the Security of Oscillator-Based Random Number Generators. *J Cryptol*, April 2011, vol. 24 (2), 398-425